# EUROPÄISCHE PATENTANMELDUNG

(11) **EP 4 726 249 A1**
(43) Veröffentlichungstag der Anmeldung: **15.04.2026**
(21) Anmeldenummer: 25199873.8
(22) Anmeldetag: 03.09.2025
(51) Int. Cl.: F16M 11/24, F16M 11/08, F16M 11/20, G03B 17/56

(54) **HALTERUNGSSYSTEM FÜR EINE KAMERA**

(30) Priorität: 14.10.2024 DE 102024129761
(71) Anmelder: Staibano&Grbac Patents eGbR, 88045 Friedrichshafen (DE)
(72) Erfinder: Staibano, Jan-Luca, 72411 Bodelshausen (DE); Grbac, Adrian Mateo, 88045 Friedrichshafen (DE)
(74) Vertreter: Christ, Niko

(57) **Zusammenfassung**

Für professionelle Dreharbeiten sind Halterungssysteme für Kameras essentiell, die eine Kamera optimal stabilisieren. Je nach Anwendungsgebiet oder erwünschtem Ergebnis sind die Anforderungen an die Dämpfungseigenschaften jedoch unterschiedlich. Häufig müssen entweder eigens dafür hergestellte Systeme verwendet werden oder es bedarf elektronischer Stabilisatoren auf mehreren Achsen, die insbesondere im professionellen Bereich sehr teuer ausfallen. Die vorliegende Erfindung sieht daher ein kostengünstiges Halterungssystem vor, dessen Dämpfungs- und Entkopplungsverhalten individuell einstellbar ist und sich schnell an unterschiedliche Szenarios anpassen lässt.

## Beschreibung

Die vorliegende Erfindung betrifft ein Halterungssystem für eine Kamera zur Lagestabilisierung und zur Dämpfung von Schwingungen, umfassend einen Haltearm mit zwei Endstücken und zwei Traversen, wobei die Traversen mit den Endstücken gelenkig zu einem Parallelogramm verbunden sind und jeder Traverse mehrere Ankerpunkte zur Anbringung wenigstens eines elastischen Bandes zugeordnet sind.

Ein derartiges Halterungssystem ist in der DE 27 29 154 A1 offenbart. Es wird mit dem Gürtelbereich eines Trägers verbunden und arbeitet mit Federn, welche eine Bewegung des Trägers ausgleichen sollen, um eine an dem Halterungssystem aufgenommene Kamera zu stabilisieren.

Allgemeine Halterungssysteme sind bereits vorbekannt aus der US 10,393,476 B2. Hierbei wird ein System beschrieben, das an einer Weste montierbar ist und ein an dem System angebrachtes Objekt hinsichtlich des wahrgenommenen Gewichts für einen Träger möglichst minimiert. Dies geschieht über ein montierbares Parallelogramm, an welchem Ankerpunkte zur Befestigung elastischer Bänder oder Federn vorgesehen sind. Während das dadurch gehaltene Objekt stets fest in den Händen des Trägers bleibt, kann ein solches Halterungssystem auch für die Minimierung eines Stoßes nützlich sein, jedoch ist eine vollständige Entkopplung des angebrachten Objektes vom Träger oder die vollständige Entkopplung oder Dämpfung jeglicher auftretenden Schwingungen hier nicht vorgesehen.

Ein häufiges Problem insbesondere bei der Verwendung von Kameras ist, dass die Bewegung des Trägers und dessen leichte Lageveränderungen als Schwingungen auf die Kamera übertragen werden und dabei das aufgenommene Bild verwackeln, sofern deren Übertragung nicht weitgehend minimiert wird. Im Idealfall schwingungsgedämpfter Halterungssysteme folgt das zu haltende Objekt horizontalen Bewegungen durch anfänglich gegebene Trägheit in diese Richtung, während es in seiner vertikalen Bewegung völlig unbeeinflusst von der des Trägers bleibt. Der Träger kann dabei das Objekt freihändig neben seinem Körper auf dem anderen Ende des Armes in der Schwebe lassen, ohne dass sich die vertikale Position des Objekts ändert, selbst bei impulsiven Vertikalbewegungen des Trägers, die unter anderem durch Sprints verursacht werden können. Es bestehen noch Möglichkeiten zur vollautomatisierten elektronischen Dämpfung der Schwingungen. So wird in der EP 38 737 05 B1 ein High-End Halterungssystem für eine Kamera offenbart, das mit zusätzlicher Sensorik und Feedback-gesteuerter Elektronik und mehreren rotatorischen Freiheitsgraden Bildstabilisierung durch Schwingungsdämpfung der verbauten Regelungselektronik realisiert. Selbst kleinste Positionsänderungen werden hier automatisch registriert und korrigiert. Solche Systeme sind jedoch häufig wartungsanfällig und schwer einstellbar hinsichtlich der Änderung ihrer Handhabung. Zudem sind solche Systeme teuer in der Anschaffung und die Benutzungsdauer im Wesentlichen auf die Akkulaufzeit beschränkt. Weiter sind solche Systeme durch ihre Komplexität schwer und damit unhandlich, sowie durch ihre Elektronik in der Tragfähigkeit limitiert.

Vor diesem Hintergrund liegt der vorliegenden Erfindung die Aufgabe zugrunde, ein kostengünstiges Halterungssystem zu schaffen, das eine einstellbare Entkopplung eines Objektes vom Träger sowie ein einstellbares Dämpfungsverhalten auftretender Schwingungen ermöglicht.

Dies gelingt durch ein Halterungssystem gemäß den Merkmalen des unabhängigen Anspruchs 1. Sinnvolle Ausgestaltungen einer solchen Vorrichtung können den sich anschließenden abhängigen Ansprüchen entnommen werden.

Vorgesehen ist insoweit ein Halterungssystem für eine Kamera zur Lagestabilisierung und zur Dämpfung von Schwingungen, umfassend einen Haltearm mit zwei Endstücken und zwei Traversen, wobei die Traversen mit den Endstücken gelenkig zu einem Parallelogramm verbunden sind und jeder Traversen mehrere Ankerpunkte zur Anbringung wenigstens eines elastischen Bandes zugeordnet sind. Erfindungsgemäß ist das Halterungssystem dadurch gekennzeichnet, dass an wenigstens zwei Ankerpunkten des Haltearms Führungsrollen angeordnet sind, an denen wenigstens ein elastisches Band angebracht ist, wobei die Führungsrollen auf Befestigungsbolzen drehbar an dem Haltearm gelagert sind und den Befestigungsbolzen einstellbare Bremselemente zugeordnet sind.

Die vorliegende Erfindung ermöglicht durch ihre Konstruktion eine Führung einer Kamera mithilfe eines Halterungssystems, wobei eine durch Bremselemente anpassbare Reibung erzeugt wird und mit einer anpassbaren Geometrie der Bänder kombiniert wird, um eine individuell einstellbare Schwingungsdämpfung sowie ein individuell einstellbares Tragkraftverhalten über den Hub des Parallelogramms zu erreichen, mit der eine Kameraführung optimiert werden kann. Um die Kamera nach Bedarf entweder in einer ruhigen, gedämpften Bewegung zu führen oder ein Nachführen der Kamera möglichst sogar zu verhindern, ist eine anpassbare Schwingungsdämpfung von enormer Bedeutung. Ist die Reibung der Bremselemente minimal eingestellt und kommt es bei Dreharbeiten zu einer schlagartigen Veränderung der Lage, an die sich das Halterungssystem anpassen muss, besteht genug Spielraum, dass das Halterungssystem einfach folgen kann. Da die Reibung im System zunächst minimal eingestellt ist, verhält sich das Halterungssystem unterdämpft. Dies führt zu einem Überschwingen der neuen Gleichgewichtsposition des Systems und zu einem Auspendeln auf die neue Gleichgewichtsposition des Systems.

Einen über die Bremselemente einstellbaren Grenzfall der Dämpfungsmodalität stellt ein überdämpftes Halterungssystem dar, bei dem der Impuls der Höhen-änderung komplett gedämpft wird. Hier sind die Bremselemente so eingestellt, dass die Kamera bei einer Höhenveränderung des Trägers weiter auf ihrer alten Gleichgewichtsposition verbleibt, also die Schwingungen so stark gedämpft werden, dass die Kamera nicht einmal in eine neue Gleichgewichtsposition pendelt. Die Kamera verharrt hier, solange sich die Höhenänderungen des Trägers innerhalb des Bewegungsfreiraumes des Systems befinden, in ihrer alten Gleichgewichtsposition, bis der Träger die Kamera manuell auf eine neue Gleichgewichtsposition positioniert.

Eine weitere Eigenschaft des überdämpften Halterungssystems ist das durch die hohe vorhandene Reibung jede beliebige Position innerhalb seines Bewegungsfreiraumes als Gleichgewichtsposition fungiert. Der Träger muss die Kamera lediglich einmalig in die gewünschte Gleichgewichtsposition positionieren und sie verharrt dort. Außerhalb des überdämpften Halterungssystems hat das System immer genau eine Gleichgewichtsposition, die sich aus dem Gleichgewicht der Hubkraft des Armes und der Gewichtskraft des zu tragenden Objektes ergibt.

Zwischen den beiden Extremen können die Bremselemente auch so angezogen werden, dass sich das vorliegende Halterungssystem als kritisch gedämpftes Halterungssystem verhält. Auch hier wird der Impuls der bleibenden Höhenänderung mitgenommen, jedoch wird hier die Kamera langsam von einer alten Gleichgewichtsposition auf eine neue Gleichgewichtsposition aufsteigen. Die Bewegung wird in dieser eingestellten Dämpfungsmodalität derart verzögert, dass sich die neue Gleichgewichtsposition zwar einstellt, aber kein Pendeln zustande kommen kann, wodurch die Kamera stabiler gelagert ist.

Durch die Bremselemente der vorliegenden Erfindung werden alle Ausgestaltungsmöglichkeiten der Schwingungsdämpfung samt sich dazwischen befindlichen Dämpfungsmodalitäten in einem einzigen kostengünstigen und individuell anpassbaren Halterungssystem verwirklicht.

In einer ersten konkreten Ausgestaltung kann vorgesehen sein, dass es sich bei den Bremselementen um ringförmige, im Querschnitt nach innen keilförmig zulaufende Keilscheiben handelt, die zwischen den Führungsrollen und einem endständigen an dem Befestigungsbolzen angeformten Bolzenkopf zwischengelegt sind. Dies führt dazu, dass die Reibung zwischen der Traversen und der Führungsrolle optimal kontrolliert wird, wodurch die Dämpfung durch einfaches Verstellen zwischen den oben beschriebenen Dämpfungsmodalitäten verändert werden kann, ohne auf ein neues System angewiesen zu sein.

Vorteilhafterweise können den Führungsrollen ein Gleitlager, vorzugsweise in Form einer Polytetrafluorethylen-Beschichtung, und/oder ein Nadellager und/oder ein Kugellager und/oder ein Wälzlager zugeordnet sein. Aufgrund dieser Merkmale kann die Reibung zwischen den Führungsrollen und den Befestigungsbolzen oder den Führungsrollen und den darauf reibenden elastischen Bändern für den Fall der unterdämpften Schwingung weitest möglich minimiert werden. Eine minimale Reibung ist in diesem Fall notwendig, um dem Halterungssystem eine möglichst geringe Dämpfungskraft zu bieten.

Weiterhin erscheint es vorteilhaft, wenn die Traversen und/oder die Führungsrollen aus Aluminium oder ABS-Kunststoff gefertigt sind. Dies schafft eine leichte, stabile und dauerhafte Konstruktion, die kostengünstig hergestellt werden kann und im Hinblick auf die Führungsrollen deren Reibungskoeffizient je nach gewähltem Material unterschiedlich ausfällt.

In einer weiteren Ausgestaltung kann wenigstens eine Führungsrolle unbeweglich montiert sein. Dadurch können nicht benötigte Freiheitsgrade des Halterungssystems unterbunden werden, sodass ein Anwender schneller zwischen den einzelnen Dämpfungsmodalitäten wechseln oder seine individuelle Kameraführung einfacher anpassen kann, da hierzu nicht jede Führungsrolle einzeln angepasst werden muss. Es können dennoch solche Halterungssysteme realisiert werden, bei denen jede Führungsrolle individuell anpassbar ist. Somit hat ein Anwender die Möglichkeit, selbst eine Vielzahl an Einstellungen des Haltearmes vorzunehmen.

Vorzugsweise können mehrere Haltearme über deren Endstücke miteinander verbunden sein. Dies schafft zusätzliche Flexibilität und liefert eine höhere Anzahl an Kombinationsmöglichkeiten, wodurch sich eine Vielzahl an Zwischenstufen der oben genannten Dämpfungsmodalitäten realisieren lässt, ohne dass hierfür ein komplett neues System notwendig wird. Mehrere aneinander befestigte Haltearme müssen jedoch separat aufeinander abgestimmt werden.

In einer bevorzugten Ausgestaltung kann an zwei Ankerpunkten ein von der Traverse abstehendes Kniegelenk angebracht sein, wobei das Kniegelenk einen ersten Gelenkfuß und einen über ein Gelenkscharnier mit dem ersten Gelenkfuß verbundenen zweiten Gelenkfuß umfasst, wobei dem Kniegelenk eine Führungsrolle zugeordnet ist, an der wenigstens ein elastisches Band angebracht ist. Dadurch können die Dämpfungsmodalitäten zusätzlich individuell angepasst werden, da ein solches Kniegelenk eine stärkere Dehnung des elastischen Bandes bewirken kann, was sich wiederum auf die Federungseigenschaften auswirkt. Wenn eine auf dem Halterungssystem befestigte Kamera mit einem anderen Objektiv ausgestattet oder eine andere Kamera verwendet wird, verändert sich die Masse, die das Halterungssystem dämpfen muss. Ist die Masse lediglich leicht höher als eine vorherige Einstellung, jedoch nicht solchermaßen höher, dass ein zweites elastisches Band benötigt würde, so ist die Verwendung eines solchen Kniegelenks äußerst vorteilhaft. Das Kniegelenk kann durch die Anbringung an unterschiedlichen Ankerpunkten der Traversen einen variablen Winkel ausformen, wodurch die Zugspannung des auf den Führungsrollen anzubringenden elastischen Bandes stufenweise variiert werden kann. Das Band kann zudem auch in unterschiedlichen Konfigurationen auf den Führungsrollen angebracht werden, um die Zugspannung zusätzlich leicht zu variieren. Damit lässt sich das Halterungssystem an eine Vielzahl von Situationen individuell anpassen.

Vorzugsweise kann die Führungsrolle auf einem Befestigungsbolzen drehbar an dem wenigstens einen Ankerpunkt des Kniegelenks gelagert sein. Auch hier kann die Reibung mittels eines Bremselements individuell kontrolliert werden, um zwischen den einzelnen Dämpfungsmodalitäten wechseln zu können, ohne Elemente entfernen zu müssen.

Weiterhin erscheint es vorteilhaft, wenn der wenigstens eine Ankerpunkt an dem Gelenkscharnier angebracht ist. Dadurch verändert sich bei einem Verdrehen der Traversen gegen die Endstücke die Lage der Führungsrolle langsamer als die Lage anderer Führungsrollen an den Traversen und die von den verwendeten elastischen Bändern eingeschlossenen Winkel passen sich durch diese Bewegungen an. Weiterhin verändert sich somit die Dehnung des elastischen Bandes über den Hub des Armes. Das Kniegelenk drückt im oberen Totpunkt stärker in das Band und geht im unteren Totpunkt aus dem Weg. So wirkt es der bei der Diagonalverspannung vorliegenden geringen Spannung am oberen Totpunkt, und großen Spannung am unteren entgegen. Es stellt sich somit ein variables Dämpfungsverhalten ein, welches aus der Kombination der Anpassbarkeit der Dehnungskurve der Bänder über den Hub des Armes und der einstellbaren Reibung resultiert.

In einer konkreten Ausgestaltung kann vorgesehen sein, dass wenigstens einem der Endstücke des Haltearms ein Ankerpunkt zur Anbringung des ersten oder zweiten Gelenkfußes des Gelenkscharniers zugeordnet ist. Dadurch werden mehr Verwendungsmöglichkeiten des Kniegelenks ermöglicht, da sich durch den zusätzlichen Ankerpunkt eine höhere Variation an Winkeln ergibt, die das Kniegelenk mit der Traversen einschließt. Analog zu der oben dargestellten Möglichkeit führt eine solche Modifikation dazu, dass sich noch mehr anpassbare Stufen ergeben.

In einer weiteren Ausgestaltung erscheint es sinnvoll, wenn die Befestigungsbolzen an einer Vorderseite des Haltearms mit weiteren, an einer Rückseite des Haltearms angebrachten Befestigungsbolzen zusammenwirken. Dadurch lassen sich auf beiden Seiten des Haltearms elastische Bänder anbringen, deren Reibung variiert werden kann, aber auf beiden Seiten stets gleich bleibt.

Vorteilhafterweise können die Befestigungsbolzen mit weiteren Haltemitteln eine lösbare Verbindung an einem Ankerpunkt des Haltearmes ausbilden. Dadurch können die Führungsrollen nach Bedarf entnommen und ausgetauscht oder an anderen Stellen des Haltearmes angebracht werden, um sich den jeweiligen Umgebungen optimal anzupassen.

Bevorzugtermaßen können die Befestigungsbolzen mit einem Gewinde einer Sackbohrung zusammenwirken, wobei die Befestigungsbolzen in der Sackbohrung verklebt sein können. Für den Fall, dass manche Führungsrollen unlösbar gelagert werden sollen, stellt eine solche Befestigungsmodalität eine kostengünstige und effektive Lösung dar. Eine solche Befestigung kann mithilfe eines Klebstoffs, insbesondere eines speziellen Schraubensicherungsklebstoffs, oder eines ähnlichen in die Schraubenwindungen eingebrachten Mittels erfolgen.

Die vorstehend beschriebene Erfindung wird im Folgenden anhand eines Ausführungsbeispiels näher erläutert.

Es zeigen
- Figur 1: eine perspektivische Darstellung des Halterungssystems, in der zwei Haltearme mit insgesamt vier Führungsrollen pro Haltearm miteinander verbunden sind,
- Figur 2 und 3: eine perspektivische Darstellung des Halterungssystems mit insgesamt acht Führungsrollen für zwei Bespannungsvariationen,
- Figur 4 und 5: eine perspektivische Darstellung des Halterungssystems mit insgesamt sechs Führungsrollen und einem Erhöhungselement für zwei Bespannungsvariationen,
- Figur 6: eine perspektivische Darstellung des Halterungssystems mit einem Haltearm mit insgesamt sechs Führungsrollen, wobei eine Führungsrolle an einem Kniegelenk angebracht ist,
- Figur 7: eine schematische Darstellung einer Führungsrolle in einer Schrägansicht im befestigten Zustand ohne das Halterungssystem, sowie
- Figur 8: eine schematische Explosions-Darstellung der Führungsrolle in einer Schrägansicht mit den Befestigungselementen und Bremsmitteln.

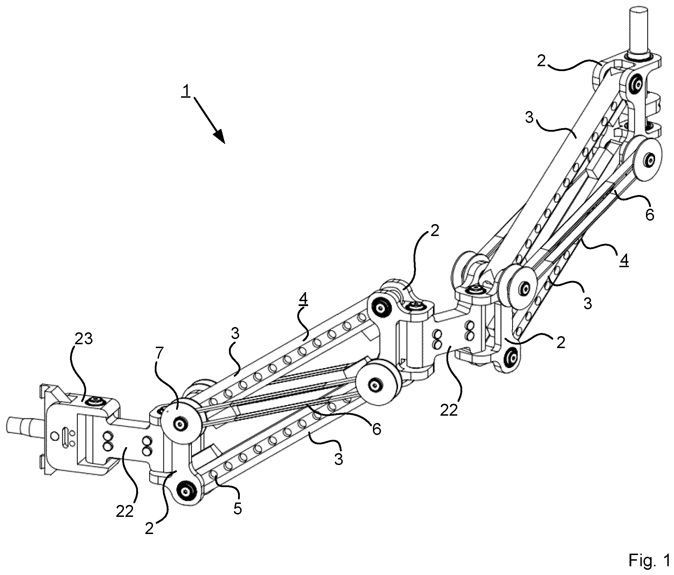

Figur 1 zeigt schematisch ein Halterungssystem, in dem zwei Haltearme 1 mit jeweils zwei Endstücken 2 vorgesehen sind. Die Haltearme 1 sind über deren Endstücke 2 miteinander verbunden. Zwischen den beiden Haltearmen 1 des Halterungssystems ist ein Verbindungselement 22 vorgesehen, welches auch einen Tragverbinder 23, der mit einer hier nicht dargestellten Tragweste eines Anwenders verbunden werden kann, mit einem der Haltearme 1 verbindet. Die Verbindungselemente 22 sind so verschraubt, dass die Haltearme 1 an diesem Punkt schwenkbar beweglich sind und einem Anwender die maximale Bewegungsfreiheit gewährt. Beide Haltearme 1 weisen hierbei jeweils vier Führungsrollen 7 auf, wobei zwei Führungsrollen 7 auf einer Vorderseite 16 und zwei Führungsrollen 7 auf einer Rückseite 17 des Haltearms 1 angebracht sind. Die Führungsrollen 7 sind an den Endstücken 2 des Haltearmes 1 diagonal gegenüberliegend angebracht. Sie können aber auch an beliebigen Ankerpunkten 5 der Traversen 3 angebracht sein, so dass über die Führungsrollen 7 gespannte elastische Bänder 6 eine geringere Federkraft ausüben. Über die Führungsrollen 7 ist jeweils ein solches elastisches Band 6 gespannt, sodass ein aus zwei Traversen 3 und zwei Endstücken 2 zusammengefügtes Parallelogramm 4 bei Anbringung eines Gewichts gegenfedern kann. Die Endstücke 2 können auch andersartig ausgeformt sein, sodass ein Stift hindurch gesteckt werden kann, an welchem eine Kamera befestigt wird. Hier ist ein zusätzlicher Haltepunkt vorgesehen. Zwei hintereinander angebrachte Haltearme erlauben dem Anwender zusätzliche Freiheitsgrade bei der Kameraführung und ermöglichen gleichzeitig einfache Schwenkbewegungen in einer horizontalen Ebene.

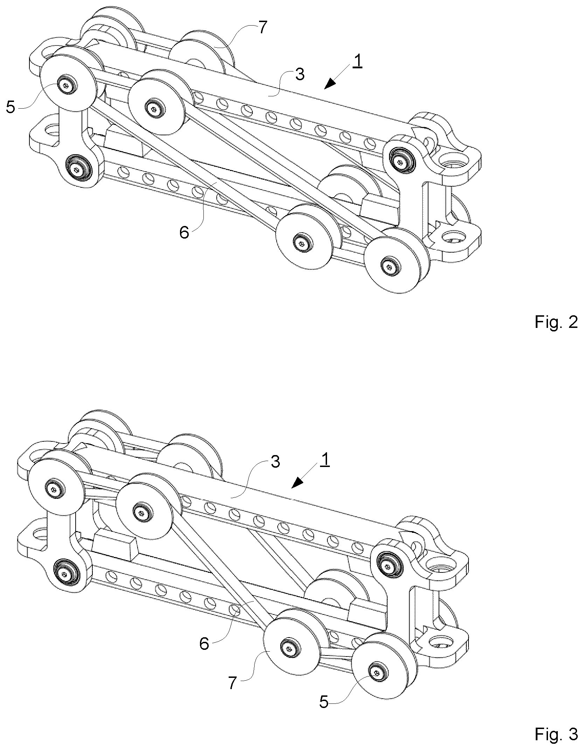

Die Figuren 2 und 3 zeigen schematische Darstellungen des Halterungssystems in einer Schrägansicht mit insgesamt acht Führungsrollen 7, die alle an Ankerpunkten 5 montiert sind, welche sich an den Traversen 3 des Haltearms 1 befinden. Figur 2 stellt dar, dass das elastische Band 6 jede Führungsrolle 7 nur einmal durchläuft, wohingegen das elastische Band 6 in Figur 3 so angebracht ist, dass das elastische Band 6 auf dem Hinweg und dem Rückweg doppelt durch die mittleren Führungsrollen 7 geführt ist. Dadurch kann durch die variable Anbringung eine erhöhte Zugspannung bewirkt werden, um die Dämpfungseigenschaften des Halterungssystems weiter zu optimieren.

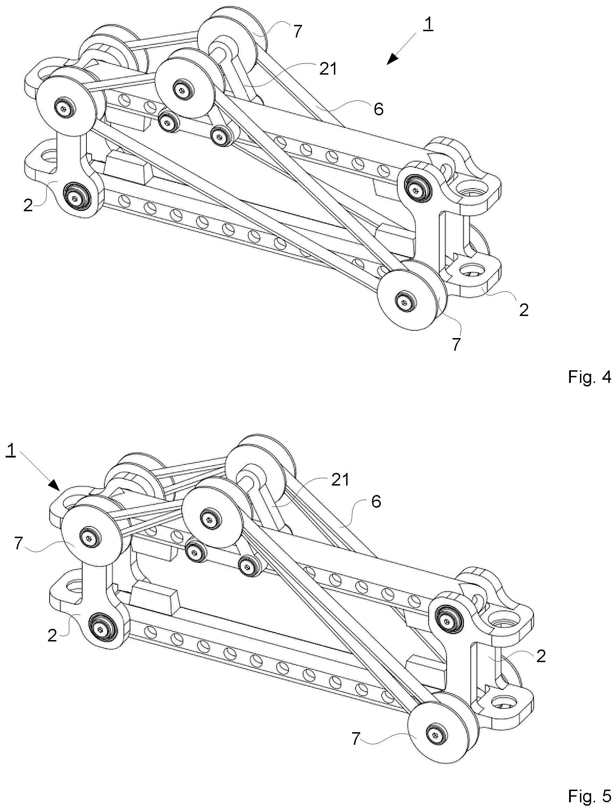

Die Figuren 4 und 5 zeigen schematische Darstellungen des Halterungssystems mit insgesamt sechs Führungsrollen 7 und einem Erhöhungselement 21 in einer Schrägansicht für zwei mögliche Ausführungsformen, in denen das elastische Band 6 über den Haltearm 1 gespannt werden kann. In Figur 4 wird das elastische Band 6 um die an den Endstücken 2 angebrachten Führungsrollen 7 gespannt und durchläuft die an dem Erhöhungselement 21 angebrachte Führungsrolle 7 einmal. Figur 5 zeigt eine Ausführungsform, bei der das elastische Band 6 die Führungsrolle 7 an dem Erhöhungselement 21 zweimal durchläuft, wodurch eine größere Wegstrecke überbrückt und damit eine stärkere Dehnung des elastischen Bandes 6 bewirkt wird. Durch eine solche Anbringung werden die Dämpfungseigenschaften des Systems leicht verändert. Zusätzlich ist das elastische Band 6 stärker abhängig von der Führungsrolle 7 des Erhöhungselements 21 und dessen Position entlang der Traversen 3. Beide Endstücke 2 des Haltearmes 1 sind in dieser Ausführungsform identisch konstruiert.

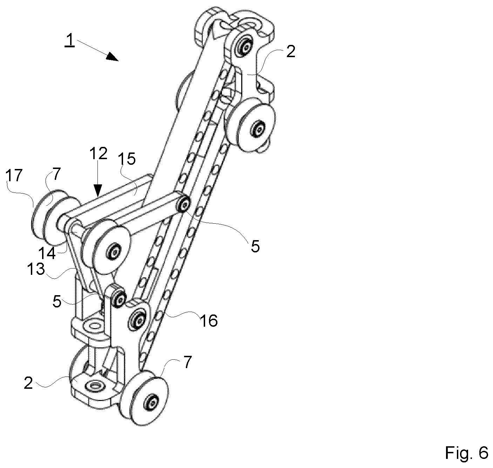

Figur 6 zeigt in einer schematischen Darstellung das Halterungssystem mit insgesamt sechs Führungsrollen 7 in einer Schrägansicht, wobei zwei Führungsrollen 7 an einem Kniegelenk 12 angebracht sind, das sich außerhalb des Haltearms 1 befindet. Ein Endstück 2 ist leicht modifiziert und weist an einem erhöhten Punkt einen Ankerpunkt 5 auf, an dem ein erster Gelenkfuß 13 des Kniegelenks 12 montiert ist. Ein zweiter Gelenkfuß 15 des Kniegelenks 12 ist mittig an einem Ankerpunkt 5 der Traverse 3 montiert, kann jedoch an einem beliebigen anderen Ankerpunkt 5 entlang der Traverse 3 befestigt sein. Der erste Gelenkfuß 13 und der zweite Gelenkfuß 15 sind hier so ausgestaltet, dass sie in etwa gleich lang sind. Sie können jedoch auch unterschiedlich lang ausgeformt sein und gerade oder gebogen verlaufen. Das Kniegelenk 12 weist zwischen dem ersten Gelenkfuß 13 und zweiten Gelenkfuß 15 ein Gelenkscharnier 14 auf, durch dessen Mitte ein außerhalb der Traversen 3 liegender Ankerpunkt 5 verläuft. In dieser Ausführungsform weist das Kniegelenk 12 einen einzigen solchen außenliegenden Ankerpunkt 5 zur Befestigung einer Führungsrolle 7 auf, das Kniegelenk 12 kann aber auch so ausgestaltet sein, dass es mehrere solche Ankerpunkte 5 aufweist. An dem hier eingezeichneten Ankerpunkt 5 des Kniegelenks 12 ist an einer Vorderseite 16 und einer Rückseite 17 des Kniegelenks 12 jeweils eine Führungsrolle 7 angebracht. Der hier eingezeichnete Haltearm 1 ist zur Veranschaulichung ohne die elastischen Bänder 6 dargestellt. Ein solches Kniegelenk 12 kann an unterschiedlichen Ankerpunkten 5 des Haltearms 1 montiert werden und bildet dadurch unterschiedliche Winkel aus, wodurch der Weg eines um die drei Führungsrollen 7 gespannten, hier nicht eingezeichneten elastischen Bandes 6 variabel wird und sich damit die Federkraft des Haltearms 1 einstellen lässt. Gleichzeitig ändert sich der Winkel des Kniegelenks 12 während einer Neigung des Parallelogramms 4, in der sich der Winkel zwischen den Endstücken 2 und den Traversen 3 verändert.

Auch die Darstellungen der Figuren 2 und 3 könnten mit einem solchen Kniegelenk 12 oder mit einem Erhöhungselement 21, wie in den Figuren 4 und 5 dargestellt, beliebig erweitert werden. Es könnten auch insgesamt mehrere elastische Bänder 6 um die Führungsrollen 7 angebracht werden, als - wie in den Abbildungen dargestellt - ein elastisches Band 6 pro Seite. Darüber hinaus sind in den Darstellungen alle Ankerpunkte 5 der Traversen 3 identisch und äquidistant dargestellt. Ihnen können aber auch unterschiedliche Lager zugeordnet sein, um eine erhöhte Variation der Reibung gewährleisten zu können, zwischen denen ein Anwender beliebig variieren kann. Auch können die Ankerpunkte 5 unterschiedlich weit voneinander entfernt vorgesehen sein.

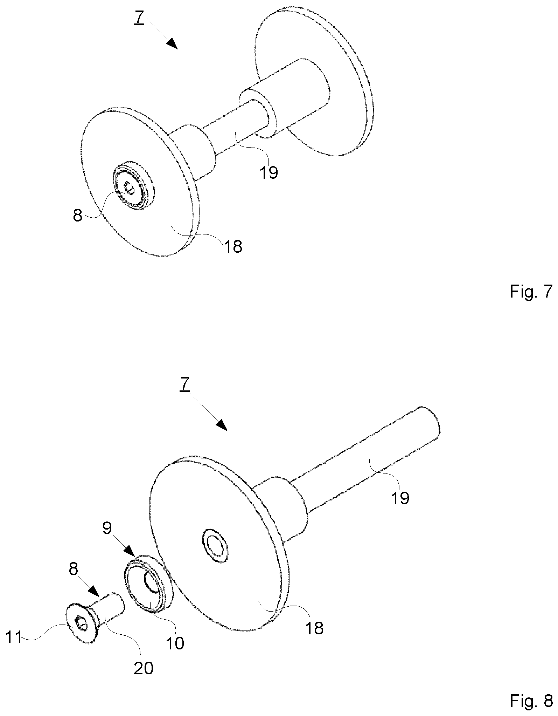

Figur 7 zeigt eine schematische Darstellung einer Führungsrolle 7 im befestigten Zustand, jedoch ohne das Halterungssystem, in einer Schrägansicht. In dieser Ausführungsform ist die Führungsrolle 7 eine einstückige, rund geformte Befestigungsscheibe 18, die mit einer Bremsscheibe 9 durch Befestigungsbolzen 8 auf einer Achse 19 von beiden Seiten angebracht ist und an dieser fest montiert werden kann. Zwei solche an derselben Achse 19 angebrachte Befestigungsscheiben 18 bilden eine Führungsrolle 7, die an den Ankerpunkten 5 des Haltearms 1 angebracht werden kann. Die Führungsrolle 7 stellt somit ein einfaches, funktionales und kostengünstiges Element dar, das mit einfachen Mitteln gefertigt werden kann und einfach zu zerlegen ist.

Figur 8 zeigt eine schematische Darstellung eines Teils der Führungsrolle 7 in einer Schrägansicht als Explosionsdarstellung. In dieser Darstellung ist der Befestigungsbolzen 8 mit dem Bolzenkopf 11 eine Schraube 20, die mit einem Innengewinde der Achse 19 zusammenwirkt und die Führungsrolle 7 befestigt. Zwischen der Schraube 20 und der Führungsrolle 7 ist ein Bremselement 9 in Form einer Keilscheibe 10 angeordnet. Durch das an der Schraube 20 anliegende Drehmoment kann die Reibung kontrolliert und variiert werden. Eine Variation der Reibung bewirkt eine kontrollierbare Positionsänderung der auf den Führungsrollen angebrachten elastischen Bänder während ihrer Dehnung. Dadurch können die Dämpfungsmodalitäten des Halterungssystems beeinflusst werden. Es können auch Ankerpunkte 5 verwendet werden, die kein Spiel aufweisen und somit durch Haftreibung mit dem Rest des Haltearms 1 verbunden sind.

Vorstehend beschrieben ist somit ein kostengünstiges Halterungssystem, das eine einstellbare Entkopplung eines Objektes vom Träger sowie ein einstellbares Dämpfungsverhalten auftretender Schwingungen ermöglicht.

### BEZUGSZEICHENLISTE

- 1: Haltearm
- 2: Endstück
- 3: Traverse
- 4: Parallelogramm
- 5: Ankerpunkt
- 6: elastisches Band
- 7: Führungsrolle
- 8: Befestigungsbolzen
- 9: Bremselement
- 10: Keilscheibe
- 11: Bolzenkopf
- 12: Kniegelenk
- 13: erster Gelenkfuß
- 14: Gelenkscharnier
- 15: zweiter Gelenkfuß
- 16: Vorderseite
- 17: Rückseite
- 18: Befestigungsscheibe
- 19: Achse
- 20: Schraube
- 21: Erhöhungselement
- 22: Verbindungselement
- 23: Tragverbinder

## Patentansprüche

1. Halterungssystem für eine Kamera zur Lagestabilisierung und zur Dämpfung von Schwingungen, umfassend einen Haltearm (1) mit zwei Endstücken (2) und zwei Traversen (3), wobei die Traversen (3) mit den Endstücken (2) gelenkig zu einem Parallelogramm (4) verbunden sind und jeder Traversen (3) mehrere Ankerpunkte (5) zur Anbringung wenigstens eines elastischen Bandes (6) zugeordnet sind,
**dadurch gekennzeichnet, dass** an wenigstens zwei Ankerpunkten (5) des Haltearms (1) Führungsrollen (7) angeordnet sind, an denen wenigstens ein elastisches Band (6) angebracht ist, wobei die Führungsrollen (7) auf Befestigungsbolzen (8) drehbar an dem Haltearm (1) gelagert sind und den Befestigungsbolzen (8) als einstellbare Bremselemente (9) zugeordnet sind.

2. Halterungssystem gemäß Anspruch 1, **dadurch gekennzeichnet, dass** es sich bei den Bremselementen (9) um ringförmige, im Querschnitt nach innen keilförmig zulaufende Keilscheiben (10) handelt, die zwischen den Führungsrollen (7) und einem endständigen an dem Befestigungsbolzen (8) angeformten Bolzenkopf (11) zwischengelegt sind.

3. Halterungssystem gemäß einem der vorhergehenden Ansprüche, **dadurch gekennzeichnet, dass** den Ankerpunkten (5) ein Gleitlager, vorzugsweise in Form einer Polytetrafluorethylen-Beschichtung, und/oder ein Nadellager und/oder ein Kugellager und/oder ein Wälzlager zugeordnet ist.

4. Halterungssystem gemäß einem der vorhergehenden Ansprüche, **dadurch gekennzeichnet, dass** die Traversen (3) und/oder die Führungsrollen (7) aus Aluminium oder ABS-Kunststoff gefertigt sind.

5. Halterungssystem gemäß einem der vorhergehenden Ansprüche, **dadurch gekennzeichnet, dass** wenigstens eine Führungsrolle (7) unbeweglich montiert ist.

6. Halterungssystem gemäß einem der vorhergehenden Ansprüche, **dadurch gekennzeichnet, dass** mehrere Haltearme (1) über deren Endstücke (2) miteinander verbunden sind.

7. Halterungssystem gemäß einem der vorhergehenden Ansprüche, **dadurch gekennzeichnet, dass** an zwei Ankerpunkten (5) ein von der Traverse (3) abstehendes Kniegelenk (12) angebracht ist, wobei das Kniegelenk (12) einen ersten Gelenkfuß (13) und einen über ein Gelenkscharnier (14) mit dem ersten Gelenkfuß (13) verbundenen zweiten Gelenkfuß (15) umfasst, wobei dem Kniegelenk (12) eine Führungsrolle (7) zugeordnet ist, an der wenigstens ein elastisches Band (6) angebracht ist.

8. Halterungssystem gemäß Anspruch 7, **dadurch gekennzeichnet, dass** die Führungsrolle (7) auf einem Befestigungsbolzen (8) drehbar an dem wenigstens einen Ankerpunkt (5) des Kniegelenks gelagert ist.

9. Halterungssystem gemäß einem der Ansprüche 7 oder 8, **dadurch gekennzeichnet, dass** der wenigstens eine Ankerpunkt (5) an dem Gelenkscharnier (14) angebracht ist.

10. Halterungssystem gemäß einem der Ansprüche 7 bis 9, **dadurch gekennzeichnet, dass** wenigstens einem der Endstücke (2) des Haltearms (1) ein Ankerpunkt (5) zur Anbringung des ersten oder zweiten Gelenkfußes (13),(15) des Gelenkscharniers (14) zugeordnet ist.

11. Halterungssystem gemäß einem der vorhergehenden Ansprüche, **dadurch gekennzeichnet, dass** die Befestigungsbolzen (8) von einer Vorderseite (16) des Haltearms (1) mit weiteren, an einer Rückseite (17) des Haltearms (1) angebrachten Befestigungsbolzen (8) zusammenwirken.

12. Halterungssystem gemäß einem der vorhergehenden Ansprüche, **dadurch gekennzeichnet, dass** die Befestigungsbolzen (8) mit weiteren Haltemitteln eine lösbare Verbindung an einem Ankerpunkt (5) des Haltearmes (1) ausbilden.

13. Halterungssystem gemäß einem der vorhergehenden Ansprüche, **dadurch gekennzeichnet, dass** die Befestigungsbolzen (8) mit einem Gewinde einer Sackbohrung zusammenwirken, wobei die Befestigungsbolzen (8) in der Sackbohrung verklebt sind.
